(19) **Europäisches Patentamt**
**European Patent Office**
**Office européen des brevets**

(11) **EP 4 682 501 A1**

(12) **EUROPEAN PATENT APPLICATION**

(43) Date of publication:
**21.01.2026 Bulletin 2026/04**

(51) International Patent Classification (IPC):
***G01M 11/00*** *(2006.01)*

(21) Application number: **24189130.8**

(52) Cooperative Patent Classification (CPC):
**G01M 11/3118; G01M 11/3181**

(22) Date of filing: **17.07.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Nokia Solutions and Networks Oy 02610 Espoo (FI)**

(72) Inventors:
- **DORIZE, Christian**
  **78320 Le Mesnil-Saint-Denis (FR)**
- **GUERRIER, Sterenn**
  **91300 Massy (FR)**
- **RENAUDIER, Jérémie**
  **91190 Gif sur Yvette (FR)**

(74) Representative: **Nokia EPO representatives Nokia Technologies Oy Karakaari 7 02610 Espoo (FI)**

(54) **INTENSITY OTDR USING PHASE-MODULATED LIGHT**

(57) A system for monitoring the strength of optical back-scattering strength along an optical fiber line includes an optical transmitter, a coherent optical receiver, and a processor. The optical transmitter is configured to probe the line with light that is phase-modulated with repetitions of code sequences longer that the round-trip time in the fiber line. The coherent receiver uses homodyne detection to convert light retuned by the optical fiber line to obtain a time sequence of return signal measurements. The processor correlates successive segments of the return signal measurements with the modulation code to obtain a time sequence of intensity response estimates, and generates a back-scattering intensity profile for the optical fiber line by time-averaging corresponding portions of the intensity response estimates.

**Description**

**TECHNICAL FIELD**

The present disclosure generally relates to optical systems, and more particularly relates to optical systems for monitoring long optical fiber links.

**BACKGROUND**

Fiber-optic communication systems, such as terrestrial and undersea optical fiber links, may be continually monitored to detect, and locate, various faults in the system that may inhibit transmission of optical signals. Such monitoring is conventionally performed from an end of the link using optical time-domain reflectometry (OTDR) to estimate an impulse response of the communication system. This may include launching an optical pulse into the optical fiber link and measuring an intensity of optical back-scattering along the link as a function of the delay between transmitting the pulse and the arrival of a back-scattered portion of the pulse. In a variant of that technique, a train of optical pulses having desired auto-correlation properties may be used to improve the signal-to-noise ratio (SNR) for a target spatial resolution.
While intensity modulation is typically used for monitoring a fiber-optic system for fiber breaks, phase-sensitive OTDR ("$\phi$-OTDR") may be used for capturing dynamic events that may occur on a fiber cable, such as vibrations or acoustic perturbations. European patent application publication EP3460441 discloses a dual-polarization probing method for monitoring the phase response of a span of optical fiber using two mutually orthogonal complementary (e.g. Golay) pairs of binary sequences applied simultaneously in phase and quadrature on two orthogonal polarizations of probing light. The method employs the two polarizations of light at both the optical receiver and the optical transmitter, and thus uses a multi-input, multi-output (MIMO) sensing approach.

**SUMMARY**

An aspect of the present disclosure relates to an apparatus for probing an optical fiber line. The apparatus (100, 700) comprises an optical transmitter (120, 720) coupled to a laser source (126, 726), a coherent optical receiver (130, 730), and a processor (140, 740). The optical transmitter is configured to launch probe light (121, 721) into the optical fiber line (160, 260, 760), the probe light being phase-modulated with repetitions of a modulation code (103, 703), each repetition of the modulation code spanning a code period ($T_{code}$). The coherent optical receiver (130, 730) is configured to mix light from the laser source with return light (161, 261 761) from the optical fiber line and to obtain, by optoelectronic conversion and analog to digital conversion, a time sequence (133, 733) of return signal measurements, said time sequence spanning a sequence of the code periods ($T_{code}$). The processor (140, 740) is coupled to the coherent optical receiver and is configured to process successive segments ($133_n$, $733_n$) of the time sequence of return signal measurements using the modulation code to obtain time sequences of intensity values, the time sequences of intensity values comprising, for each of the processed segments, a time sequence ($143_n$) of intensity values ($I_k$), and estimate a back-scattering intensity profile (148, 548, 648, 748) for the optical fiber line by averaging, at least, corresponding portions (335) of the time sequences of intensity values. Corresponding portions of the time sequences of intensity values are "corresponding" portions in the following sense. Each respective time sequence among the time sequences of intensity values comprises a respective portion, the respective portion having a length and a relative position within the respective time sequence, wherein the length and the relative position of the respective portion is the same for all the time sequences.
A related aspect of the present disclosure provides a method for probing an optical fiber line. The method comprises: launching probe light into the optical fiber line, the probe light being light from a laser source phase-modulated with repetitions of a modulation code, each repetition of the modulation code spanning a code period (Tcode); sampling, over a sequence of the code periods, a mixture of return light received from the optical fiber line with light from the laser source to obtain a time sequence of return signal measurements; processing successive segments of the time sequence of return signal measurements using the modulation code to obtain time sequences of intensity values, the time sequences of intensity values comprising, for each of the segments, a respective time sequence of intensity values; and averaging, at least, corresponding portions of the time sequences of intensity values over a series of code periods to estimate a back-scattering intensity profile for the optical fiber line.

**BRIEF DESCRIPTION OF THE DRAWINGS**

Embodiments disclosed herein will be described in greater detail with reference to the accompanying drawings which represent preferred embodiments thereof, in which like elements are indicated with like reference numerals, and wherein:

FIG. 1 schematically illustrates an example of an apparatus for monitoring back-scattering strength along an optical fiber line using phase-modulating codes and coherent detection;

FIG. 2 schematically illustrates an example of a multi-span optical fiber line with a loopback optical link;

FIG. 3A is a graph illustrating an example of a back-scattering intensity response of the optical fiber line obtained from coherent measurements of a code-length portion of return light received from the optical fiber line;

FIG. 3B is a graph illustrating an example of an average back-scattering intensity response of the optical fiber line obtained by time-averaging of the back-scattering intensity response of FIG. 3A over 5000 consecutive code periods $T_{code}$;

FIG. 4 is a flowchart of an example of a method for monitoring the back-scattering strength along an optical fiber line using phase-modulating codes and coherent detection;

FIG. 5A is a flowchart of an example of a two-stage process for extracting the back-scattering intensity profile of the optical fiber line from coherent measurements of the return light according to an embodiment of the method of FIG. 4;

FIG. 5B schematically illustrates an example of a series of the code periods time-averaging at the pattern detection stage of the process of FIG. 5A;

FIG. 5C schematically illustrates an example of a series of the code periods for time-averaging at the back-scattering intensity monitoring stage of the process of FIG. 5A;

FIG. 6 is a graph illustrating an example of the back-scattering intensity profile of the optical fiber line obtained using the two-stage process of FIG. 5A;

FIG. 7 schematically illustrates an example of an embodiment of the apparatus of FIG. 1 configured for MIMO interrogation of the optical fiber line by dual-polarization probing using orthogonal modulation codes.

DETAILED DESCRIPTION

In the following description, for purposes of explanation and not limitation, specific details are set forth, such as particular circuits, circuit components, techniques, etc. in order to provide a thorough understanding of the present invention. However, it will be apparent to one skilled in the art that the present invention may be practiced in other embodiments, embodiments that may depart from these specific details. In other instances, detailed descriptions of well-known methods, devices, and circuits may be omitted so as not to obscure the description of the present invention. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Note that as used herein, the terms "first", "second" and so forth are not intended to imply sequential ordering, but rather are intended to distinguish one element from another, unless explicitly stated. Similarly, sequential ordering of method steps does not imply a requirement of sequential order of their execution, unless explicitly stated. The term "connected" may encompass direct connections or indirect connections through intermediate elements, unless explicitly stated otherwise. The term "polarization channel" may be used herein to refer to parts of an optical transmission system, such as a dual-polarization (DP) optical transmitter or a DP optical receiver, that operate predominantly on a selected polarization component of a light signal. Different polarization components of a light signal may also be referred to as polarization tributaries, e.g. with reference to a system where they may be separately processed. The phrase "such as", when preceded by a comma ("... , such as ..."), means that the nouns introduced by "such as" must be understood as examples, not as definitions. In other words, the phrase "such as", when preceded by a comma, is synonymous with "e.g." or "for example".

Furthermore, the following abbreviations and acronyms may be used in the present document:

"RF" Radio Frequency
"PSK" Phase Shift Keying
"$M$-PSK" PSK with an $M$-symbol constellation
"BPSK" Binary Phase Shift Keying

"QPSK" Quadrature Phase Shift Keying
"QAM" Quadrature Amplitude Modulation
"IQ" in-phase / quadrature
"DP" Dual Polarization
"MIMO" Multi-Input Multi-Output
"SIMO" Single-Input Multi-Output
"SISO" Single-Input Multi-Output
"DAC" Digital-to-Analog Converter
"ADC" Analog-to-Digital Converter
"RHS" Right-Hand Side
"EDFA" Erbium-Doped Fiber Amplifier

Embodiments described below relate to an apparatus, and a corresponding method, for remote optical sensing of various irregularities of light propagation along an optical fiber, e.g. along an optical fiber line of an undersea optical communication system. Some embodiments of the apparatus and method may employ phase modulation of probe light at an optical transmitter with code sequences having appropriate correlation and/or autocorrelation properties and a matched filtering at a coherent optical receiver to obtain a profile of optical back-scattering strength along an optical fiber line. Some embodiments of the apparatus and method may employ a MIMO sensing technique, in which orthogonal polarizations of probe light that are phase-modulated with orthogonal code sequences are used to obtain an optical back-scattering intensity profile of the optical fiber line.

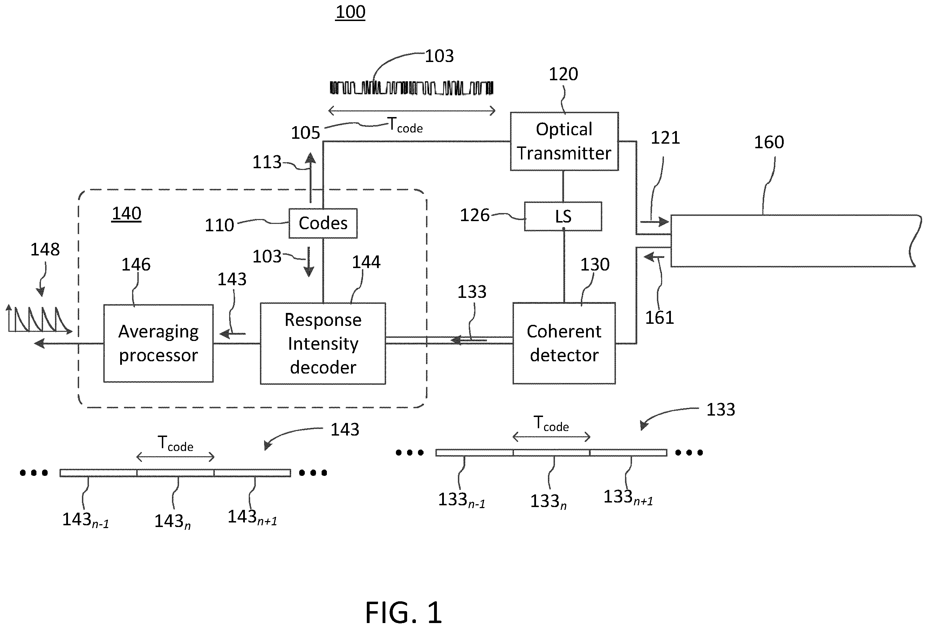

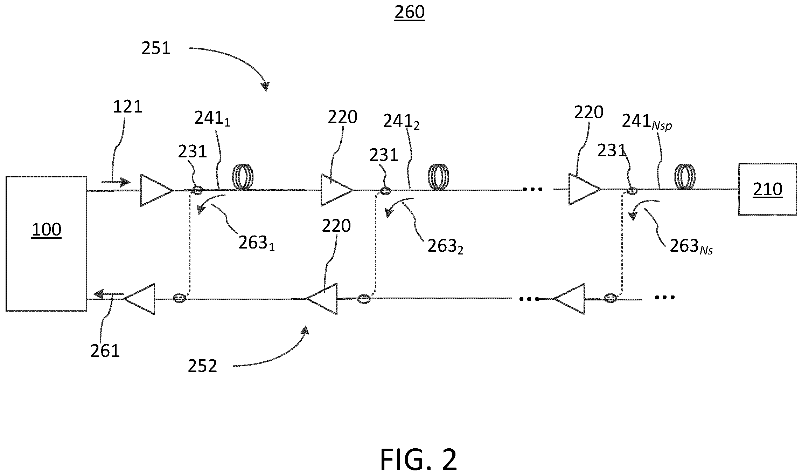

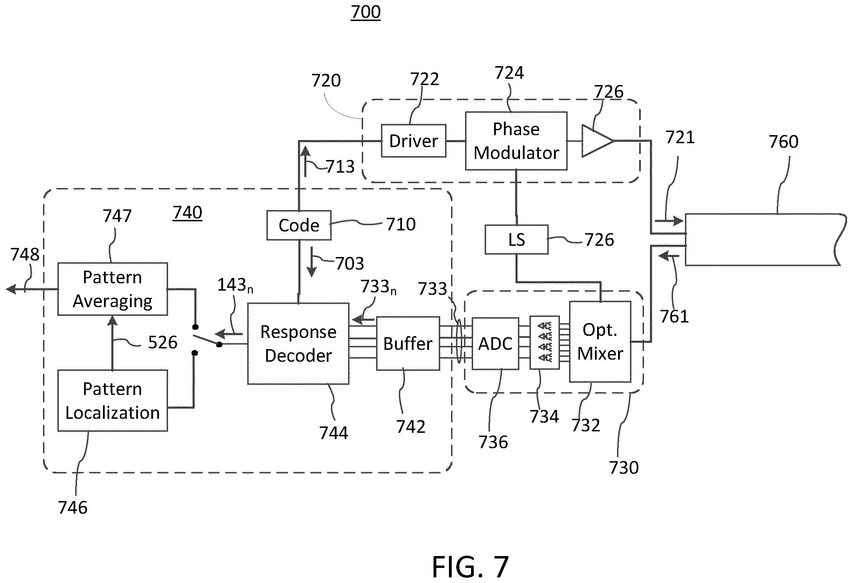

Referring now to FIG. 1, the figure schematically illustrates an example fiber interrogation apparatus 100 ("apparatus 100") for probing and/or monitoring an optical fiber line 160. In some embodiments, the optical fiber line 160 may be, for example, an optical fiber line of a deployed optical fiber communication system, and the apparatus 100 may be configured to monitor for various anomalies on the link, such as fiber breaks or other light propagation discontinuities and optical loss on the fiber line. In some implementations, the optical fiber line 160 may be, for example, an undersea optical fiber line that includes one or more line optical amplifiers and a loop-back optical fiber link, such as an optical fiber line 260 described below with reference to FIG. 2. The apparatus 100 operates by sensing the strength of the optical back-scattering and reflections at different locations along the fiber, such as Raleigh back-scattering and back-reflections at optical interfaces. An embodiment of the apparatus 100 configured for dual-polarization (DP) MIMO sensing is illustrated in FIG. 7 described below.

Apparatus 100 includes an optical transmitter (OT) 120, a coherent optical receiver (COR) 130, a laser source (LS) 126, and a processor 140. The OT 120 is configured to modulate light from the LS 126 in phase with a modulation signal 113, and launch phase-modulated probe light 121 into the optical fiber line 160. Portions of the probe light 121 that are reflected back at different locations along the optical fiber line 160, e.g. due to Raleigh back-scattering, are returned back to the apparatus 100 with return light 161. The return light 161 is measured by the COR 130, and the measurements are processed by the processor 140 to estimate, based on a known structure of the modulation signal 113, the intensity of back-scattering signals corresponding to locations along the optical fiber line 160.

The modulation signal 113 is generated by a code signal generator (CSG) 110. The CSG 110 and the processor 140 may be implemented as individual devices or in a single digital processor, for example. The modulation signal 113 comprises repetitions of a modulation code 103 having a symbol rate $F_s = 1/Ts$. Each repetition of the modulation code 103 spans a code period $T_{code}$ 105, $T_{code} = N \cdot T_s$, where $N$ denotes the number of symbols in one repetition of the modulation code 103 ("code length"). The symbol rate $F_s$ of the modulation code 103 defines the spatial resolution $l$ of the back-scattering intensity sensing, $l \sim 2 \cdot T_s \cdot v$, $v$ being the group propagation velocity of the probe light 121 in the optical fiber line 160.

In an example implementation, the code period $T_{code}$ 105 is longer that the round-trip time $T_{RTT} = 2L/v$ of the probe light in the optical fiber line 160, i.e. $T_{code} > T_{RTT}$; here $L$ is the length of the optical fiber line 160 to be interrogated. Consecutive modulation codes 103 may directly follow each other in the modulation signal 113 without gaps, to facilitate faster sensing; however, implementations with guard periods, or gaps, between consecutive modulation codes 103 are also within the scope of the present disclosure. In some implementations, the gaps, or delays, between consecutive repetitions of the modulation codes 103 may be shorter than the round-trip time $T_{RTT}$.

The modulation code 103 is schematically illustrated in FIG. 1 as a binary sequence, but may in some implementations comprise symbols of multi-level constellations, e.g. M-PSK or QAM. In some implementations, the modulation code 103 may comprise parallel code sequences to modulate the phase of different light tributaries, e.g. as described below. The modulation code 103 may comprise one or more code sequences having specific cross-correlation and auto-correlation properties. E.g., the modulation code 103 may comprise a delta-correlated code sequence, i.e. a code sequence $\{A(i)\} = \{A(i=1), A(i=2), ..., A(i=N)\}$, which auto-correlation function

$$C_{A,A}(m) = \left\{\{A(i)\} \bigoplus \{A(i+m)\}\right\} \qquad (2)$$

is approximately zero, or at least is much smaller in absolute value than $C_{A,A}(m=0)$, for any non-zero relative index shift $m$. Here $A(i)$ is the complex amplitude of the $i$-th symbol in the code sequence $\{A(i)\}$, and $N>1$ is the length of the code sequence measured in the symbol periods. In some implementations, the modulation code 103 may comprise two or more mutually orthogonal, i.e. having zero cross-correlation, and/or complementary, data sequences.

The COR 130 is configured to mix light from the laser source 126 with the return light 161 received from the optical fiber line 160, and to sample the mixture at a sampling rate $R_s$ to obtain a stream, or time sequence, of return signal measurements 133, denoted below "$S_i$". The return light 161 comprises back-scattered (including back-reflected) portions of the probe light 121, and the return signal measurements 133 may be also referred to herein as the backscattering signal measurements 133. The sampling rate $Rs$ is at least equal to the code symbol rate $Fs$ of the modulation code 103 and may be a multiple of the code symbol rate $Fs$. The sampling at the COT 130 and the generation of the modulation signal 113 for the OT 120 may be synchronized to a same clock. The time sequence of return signal measurements 133 may span a large number of the code periods $T_{code}$. In examples described below, consecutive return signal measurements, e.g. $S_i$ and $S_{i+1}$, are separated in time by one symbol period $T_s$ of the modulation code 103.

In operation, the stream of return signal measurements 133 is provided to the processor 140. The processor 140 may include a processing module 144 configured to process the stream of return signal measurements 133, e.g. in signal segments $133_n$, with $n$ denoting the segment index or counter. In some embodiments, each of the signal segments $133_n$ may have a length, or duration, of one code period $T_{code}$ and comprise a sequence of $N = T_{code}/T_s$ return signal measurements ("code-length segments") $\{S_i\}_n = S_1, S_2,..., S_N$. The processing of the signal segments $133_n$ at module 144 obtains a sequence of system intensity response (SIR) estimates $143_n$, e.g. using code-matched filtering of the stream of signal segments $133_n$. In an example embodiment, each of the SIR estimates $143_n$ is obtained by processing a corresponding signal segment $133_n$ of a duration $T_{code}$, and is a time sequence $\{I_k\}_n = \{I_{k=1}, ..., I_{k=N}\}_n$ of $N$ intensity values $I_k$ ("code-length sequence"), with successive intensity values $I_k$, $I_{k+1}$ corresponding to consecutive symbol periods $T_s$ in the signal segment $133_n$. Here $k$ is the time index of a $k$-th intensity value $I_k$, $k = 1, ..., N$, and $n$ is a segment index in the time sequence 143 of the segments. The intensity values $I_k$ may also be referred to as intensity samples $I_k$.

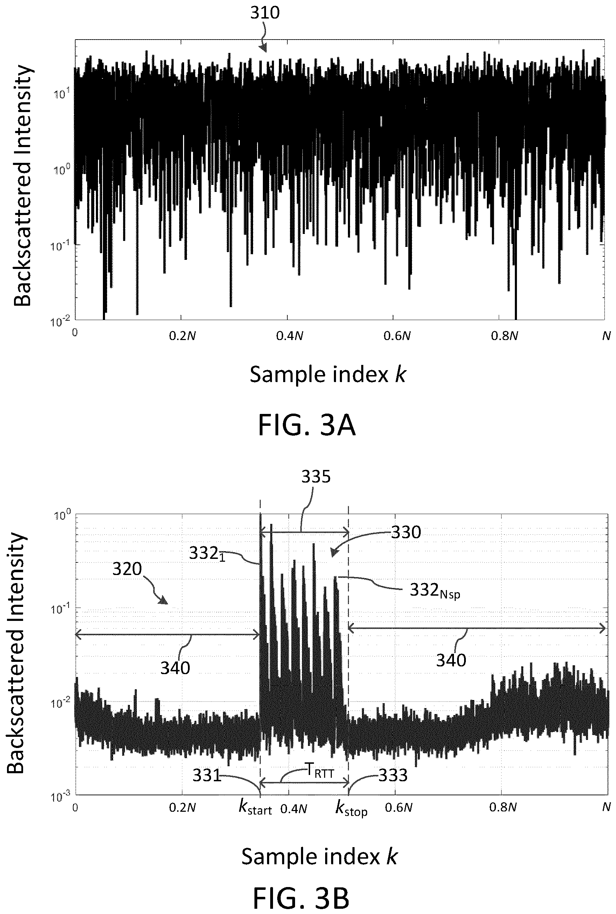

In some embodiments, the return signal measurements $S_i$ may be noisy, e.g. due to the receiver noise and/or the presence of the amplified spontaneous emission (ASE) in the return light 161, as described below with reference to an example optical fiber line 260 illustrated in FIG. 2. To reduce the effect of noise and to facilitate the sensing of the optical back-scattering intensity, the processor 140 may include an intensity averaging module 146. The intensity averaging module 146 is configured to estimate a back-scattering intensity profile 148 along the optical fiber line 160 by averaging, at least, corresponding portions (e.g. 335 in FIG. 3B, as described below) of the SIR estimates $143_n$ obtained over a number of code periods $T_{code}$. The averaging at 146 may include computing averages $\langle I_k \rangle$ of corresponding intensity values $I_k$ for a set of $M$ successive SIR estimates $\{I_k\}_n$ $143_n$:

$$\langle I_k \rangle = c \sum_{n=n0}^{n=n0+M} (I_k)_n, \qquad k = 1,..., N. \qquad (2)$$

In equation (2), c is an optional normalization constant, $n0$ is an index of a first of the $M$ sequences $\{I_k\}_n$ over which the averaging is performed. The sequences, or SIR estimates, $\{I_k\}_n$ contributing into the averaging in the RHS of equation (2) may or may not be consecutive. The averaging described by equation (2) may be referred to as the averaging over $M$ (typically, but not necessarily, consecutive) code periods.

Modules 144 and 146 of the processor 140 are functional processing units that may be configured using digital hardware logic, software logic, or a combination thereof. In an example implementation, the processing unit 144 may be configured to individually correlate segments $133_n$, denoted $\{S_i\}_n$, of the sequence of return signal measurements 133 with the modulation code 103 ("matched filtering"). Each of the signal measurements $S_i$ is a measure of a superposition of portions of the probe light 121 corresponding to different symbols of the modulation code 103 that have been reflected or scattered from different locations along the optical fiber line 160. Correlating one code-length segment $133_n$ of the digital return signal 133 with the modulation code 103 at different relative shifts $m = 1,..., N$, provides a sequence of $N$ complex response samples. This sequence of $N$ complex response samples includes an impulse response of the back-scattered optical field estimated at a series of locations along the optical fiber line 160 corresponding to some sub-set of the sample shift indices $m$. The processing unit 144 may then compute an intensity value $I_{k=m}$ for each of the $N$ complex response samples to obtain a SIR $143_n$. The SIR estimates $143_n$ (i.e. sequences $\{I_k\}_n$) corresponding to different segments $133_n$ of the digital return signal 133 are then used at the processing unit 146 to estimate a current back-scattering intensity profile 148 for the optical fiber line 160.

Referring to FIG. 2, in an example implementation the apparatus 100 may be used to monitor, or probe, a multi-span optical fiber line 260, which is an example embodiment of the optical fiber line 160 of FIG. 1. The example optical fiber line 260 includes a forward optical fiber path 251, e.g. for transmitting information-bearing optical signal to an end terminal 210, and a return optical fiber path 252. The optical apparatus 100 is connected to launch the probe light 121 into the forward optical fiber path 251, and to receive back return light 261 from the return optical fiber path 252. The forward optical fiber path 261 may include a sequence of $N_{sp}$ >1 optical fiber line segments $241_1$, $241_2$, ..., $241_{Nsp}$ ("fiber spans 241"), connected by line optical amplifiers 220. The forward optical fiber path 261 may be, e.g., a part of undersea optical communication system. The optical amplifiers 220 are typically but not necessarily erbium-doped fiber amplifiers (EDFAs). The return optical fiber path 252 is provided for transmitting back-scattered light $263_1$, $263_2$, ..., $263_{Nsp}$ from each of the corresponding line segments (" back-scattered light 263"), e.g. using backward-oriented optical couplers 231, back to the receiver port of the interrogation apparatus 100. The optical couplers 231 are typically disposed next to each of the line amplifiers 220 downstream thereof at a same node. Since the back-scattered light 263 is typically low in power and the propagation path back to the apparatus 100 is typically long, the return optical fiber path 252 also typically includes a series of optical amplifiers 220, e.g. EDFAs. As the result, the return light 261 includes, in addition to the back-scattered portions of the probe light 121, the amplified spontaneous emission ("ASE light") from the optical amplifiers 220, which may exceed in power the back-scattered probe light.

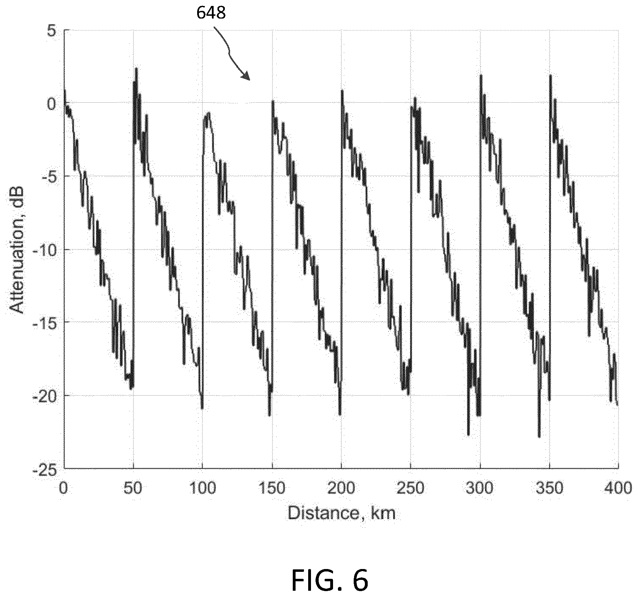

FIG. 3A illustrates an intensity response estimate $\{I_k\}$ 310 ("SIR estimate 310") that may be obtained by an example implementation of the apparatus 100 probing a 400 km optical fiber line 260 having eight successive 50km long optical fiber spans 241, based on one segment $133_n$ of the stream of return signal measurements 133. The intensity response estimate 310 is a sequence of $N$ intensity values $I_k$ and is an example of a SIR estimate $143_n$. Results presented in FIGs. 3A, 3B, and 6 are generated using computer simulations. The line is interrogated by a polarization-multiplexed phase-modulated probe light (e.g. 121) using DP-BPSK probing codes (e.g. 103) and MIMO processing at the processor 140, e.g. as described by C. Dorize and E. Awwad, "Enhancing the performance of coherent OTDR systems with polarization diversity complementary codes", Optics Express, vol. 26, pp. 12878-12890, May 2018. In the example of FIG. 3A, the code period $T_{code}$ is 16.4 milliseconds (ms), the number of symbols in one code period is $N$ = 8192, with a symbol period $T_s = T_{code}/N = 2$ microseconds ($\mu$s). The round-trip time of the probe light in this optical line, $T_{RTT}$, is about 4 ms, i.e. about 4 times shorter than the modulation code 103.

Due to the ASE noise from the optical amplifiers and the high optical loss in the loop-back optical path (e.g. 252) of the back-scattered light, the signal-to-noise (SNR) ratio for the back-scattered probe signal at the output of COT 130 is small, e.g. less than -40dB, resulting in a high level of noise in the SIR estimate 310 computed based on a single code-length segment 133n of the measured return signal 133. Therefore, the back-scattering intensity profile of the optical fiber line under test may not be directly discernable from the intensity response 310 that is obtain by processing a single code-length segment $133_n$ of the returned signal measurements 133.

Furthermore, due to the code period $T_{code}$ being longer than the round-trip time $T_{RTT}$ in the optical line under test, only a portion of the intensity response 310 is expected to comprise the back-scattering intensity profile of the optical fiber line under test, wherein each intensity value $I_k$ can be associated with a specific location along the optical fiber line under test. The location of the corresponding "useful" portion, or zone, in a single SIR estimate 310 is obscured by noise and is not easily discernable from the intensity data obtain based on a single $T_{code}$-long segment $133_n$ of the return signal measurements 133. The relative location of the line back-scattering response in successive SIR estimations is however expected to remain substantially unchanged, at least when the SIR estimates are obtained based on consecutive signal segments $133_n$, or generally based on signal segments $133_n$ starting at intervals equal to an integer multiple of code periods $T_{code}$.

FIG. 3B illustrates an average intensity response ("average SIR") 320 computed by averaging over a set of $M_{1av}$ SIR estimates $143_n$ (e.g. 310 in FIG. 3A). The average SIR 320 have been obtained in simulations by processing return signal measurements 133 spanning $M_{1av}$ code periods $T_{code}$, $M_{1av}$=5000 in this example. A line back-scattering pattern 330 located in the "useful" zone 335 of the averaged intensity response 320 is now visible. The peaks $332_1$ to $332_{Nsp}$, which correspond to the locations of the line optical amplifier nodes, now emerge from the noise and are easily discernable. The "useful" portion 335 of the intensity response 320 containing the line back-scattering pattern 330 can be provided to the output as the line back-scattering profile 148.

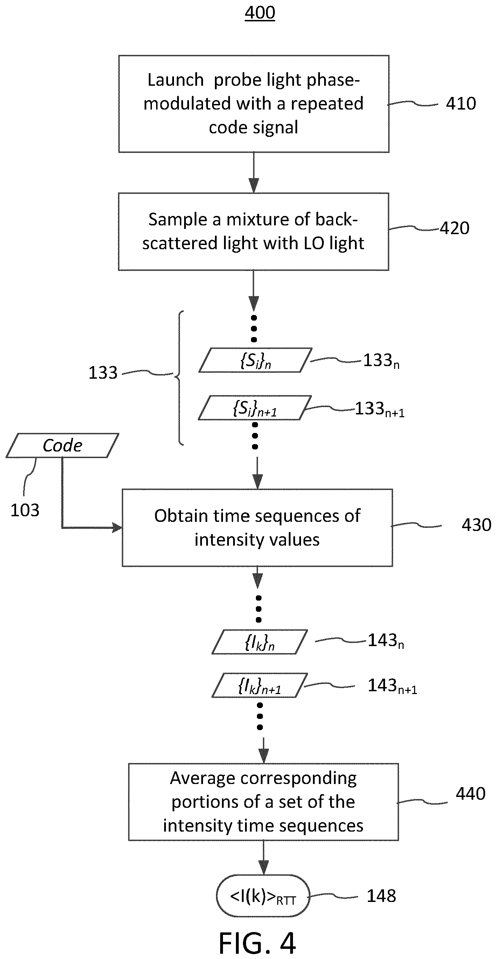

FIG. 4 is a flowchart summarizing some steps of a method 400 that the apparatus 100 may implement for probing an optical fiber line, e.g. the optical fiber line 160, 260, or 760 (FIG. 7). In the example illustrated in FIG. 4, method 400 may start at 410 with launching probe light into the optical fiber line. The probe light may be as described above, e.g. the probe light 121 from the laser source 126 that is phase-modulated with a modulation signal 113, the modulation signal 113 comprising repetitions of the modulation code 103, each repetition of the modulation code 103 spanning a code period ($T_{code}$). Method 400 further include (420) sampling, e.g. by the COT 130 or the COT 730 (FIG. 7) over a sequence of the code periods, a mixture of the return light 161 received from the optical fiber line 160 with light from the laser source 126, to obtain a time sequence 133 of return signal measurements. At 430, successive code-length segments $133_n$ of the time sequence 133 of return signal measurements are processed using the modulation code 103 to obtain a time sequence $143_n$ of intensity values $I_k$, $k$ =1,..., $N$ ("SIR estimate") for each of the segments $133_n$.

At 440, method 400 proceeds to average the time sequences $143_n$, $143_{n+1}$, ... of the intensity values $I_k$, or some corresponding "useful" portions thereof (e.g. 335, FIG. 3B) containing the line back-scattering response pattern (e.g. 330 in FIG. 3B). Within this "useful" portion, different indices $k$ of the intensity values $I_k$ correspond to different time delays $\tau_k = (k-k_{start}) \cdot T_s$ each of these time delays associated with a distance to a specific location of the back-scattering along the optical fiber line; here $k_{start}$ corresponds to the pattern start (331, FIG. 3B). Zones of the intensity response (e.g. 340, FIG. 3B) that are outside of the "useful" zone or portion (e.g. 335) are not needed for estimating the line back-scattering intensity profile 148, and may be discarded in an example embodiment.

Referring to FIGs. 1, 3B, and 4, in some embodiments, the processor 140 may be configured to determine, e.g. at step 430 of FIG. 4, the location of the line back-scattering profile pattern (330, FIG. 3B) in the averaged intensity response (320, FIG. 3B). In an embodiment, the processor 140 may be configured to first determine the location 331 (e.g., sample index $k_{start}$) of a first peak $332_1$ in the intensity response 320. This first peak $332_1$ may approximately correspond, for example, to the location of the first loop-back coupler 231 in the forward path 251 of the optical fiber line 260 illustrated in FIG. 2. The location of the first peak, e.g. $332_1$, may be determined using any suitable peak detection algorithm known in the art, such as the gradient descent/ascent algorithm. Once the start location 331 is known, the end point 333 of the useful response portion 335 containing the back-scattering profile pattern 330 may be determined, or at least approximately estimated, e.g., based on known line data, such as the overall length of the optical fiber line being monitored, the number and/or lengths of the fiber spans connecting the line optical amplifiers, etc. In some embodiments, the location of the backscatter pattern end 333 may be determined by analyzing the shape of the average SIR 320, e.g. for a loss signature of a fiber-to-receiver coupler.

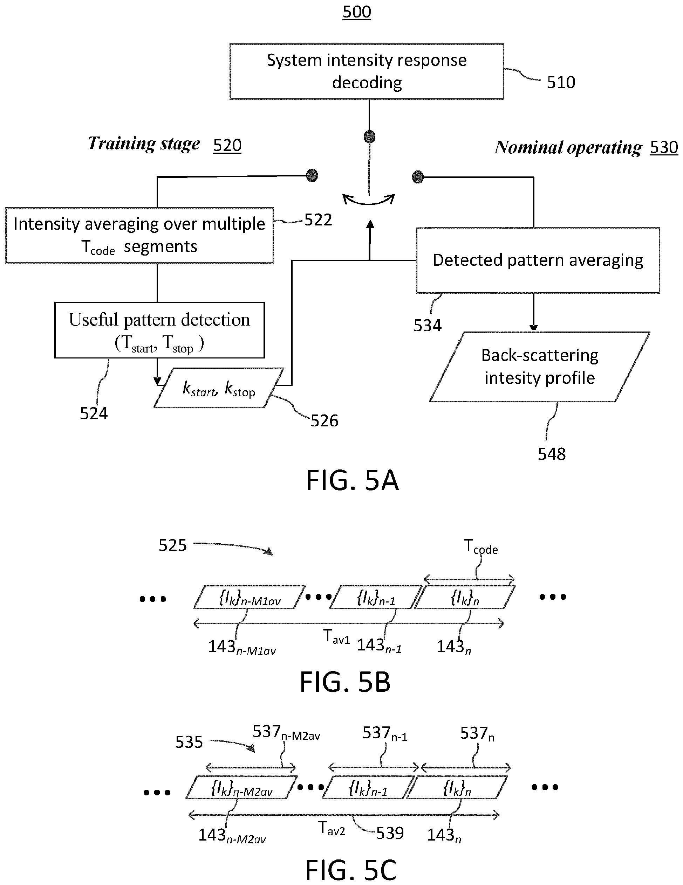

Referring to FIGs. 5A, 5B, and 5C, in some embodiments, the processor 140 of the apparatus 100 may be configured to switch between a first mode 520, referred to herein as the pattern location mode 520 ("training stage 520" in FIG. 5A), and a second mode 530, referred to herein as the line backscattering profile monitoring mode 530 ("nominal operating stage 530" in FIG. 5A). The pattern location mode 520, wherein the processor performs the detection of the back-scattering response pattern 330 (FIG. 3B), may precede the nominal operating mode or stage 530. The flowchart in FIG. 5A schematically illustrates the operation of the processor 140 according to method 500, with different blocks corresponding to different operations or sets of operations that the processor 140 may perform according to the method. At step 510, the processor 140 executes the system intensity response decoding operations, e.g. as described above with reference to the processing unit 144 of FIG. 1 and the operations at 430 of method 400, FIG. 4, or below with reference to the processing unit 744, FIG. 7. The system intensity response decoding at 510 produces a sequence of SIR estimates, e.g. $143n$, one of which being illustrated at 310 in FIG. 3A by way of example. The processing at 510 may include correlating, e.g., consecutive code-long segments $133_n$ of the measured return signal 133 with the modulation code 103 as described above with reference to FIG. 1.

At step 522 of the system training stage 520, the processor 140 computes an average of a set 525 (FIG. 5B) of different SIR estimates $143_n$, e.g. using element-by-element summation in accordance with equation (2), to obtain a code-long average SIR, e.g. 320 (FIG. 3B). The duration $T_{av1} = M_{1av} \cdot T_{code}$ of the return signal 133 over which the averaging is performed in the training stage 520, i.e. the number $M_{1av} > 1$ of the different SIR estimates $143_n$ used in the summation, may be selected to ensure a reliable pattern detection. By way of example, $M_{1av}$ may typically be in a 10 to 100 range, or greater depending on the SNR at the receiver.

At step 524, the processor 140 determines the location of a back-scattering response pattern, e.g. 330 (FIG. 3B), in the averaged SIR 320, e.g. using a suitable peak or pattern detection algorithm and, in some embodiments, known configuration of the optical fiber line being monitored, as described above. In some embodiments, a smoothing of the averaged SIR estimate, for example by means of a sliding window, may be performed at 522 or 544 to further reduce noise and improve the location detection confidence. In an example embodiment, step 524 outputs pattern location data 526, e.g., the end point locations 331 (sample index $k_{start}$) and 333 (sample index $k_{stop}$), of the useful SIR portion 335 containing the back-scattering response pattern 330. The pattern location data 526 are then saved in memory, e.g. a non-transient hardware memory device (not shown) coupled to the processor, to be used by the processor at the nominal operation stage 530.

At step 534 of the nominal operating stage 530, the processor uses a set 535 (FIG. 5C) of successive SIR estimates $143_n$ and the pattern location information 526 to compute a line back-scattering intensity profile 548. The line back-scattering intensity profile 548 may be an example of the back-scattering intensity profile 148 (FIG. 1). At the nominal operating stage 530, the processor may selectively average only the "useful" portions (e.g. 335, FIG. 3B) of the accumulated SIR estimates $143_n$ between $k_{start}$ (331, FIG. 3B) and $k_{stop}$ (333, FIG. 3B) containing the line back-scattering pattern, e.g. 330 (FIG. 3B).

Referring to FIGs. 5A and 5C, in some embodiments, the averaging at 534 may be performed over a sliding time-averaging window 539 (FIG. 5C) of width $T_{av2}$, and may include averaging intensity samples $I_k$ at corresponding location indices $k$ in the "useful" portions (e.g. 335, FIG. 3B) of the SIR estimates $143_n$, $143_{n-1}$,..., $143_{n-M2av}$ that are obtained for a current code period ($537_n$, FIG. 5C) and preceding ($537_{n-1}$, ... $537_{n-M2av}$) code periods. In some embodiments, contributions from the preceding code periods may be weighted with corresponding "forgetting factors", which may decrease with a distance from the current code period.

Prior to the averaging at 534, the processor may discard SIR portions (e.g. zones 340, FIG. 3B) preceding the start point, e.g. 331, (sample indices $k < k_{start}$) and following the end point, e.g. 333, (sample indices $k > k_{stop}$) of the "useful" SIR portion 335 containing the line backscattering pattern 330. Advantageously, this data truncation reduces the size of the used buffers and the number of summation operations per averaging, facilitating faster convergence in real-time operation. Furthermore, the data truncation down to the useful SIR portion, e.g. 330, facilitates the output of a back-scattering intensity profile 548 where each sample is directly associated with a specific location along the optical fiber line being monitored.

The duration $T_{av2} = M_{2av} \cdot T_{code}$ of the return signal 133 ("averaging window $T_{av2}$") over which the averaging at 534 is performed, i.e. a characteristic number $M_{2av}$ of the different SIR estimates $143_n$ used in the averaging summation (cf equation (2)), may be selected to provide a target optical loss detection sensitivity. In some embodiments $M_{3a} > M_{1av}$, so that the averaging window $T_{av2} = M_{2av} \cdot T_{code}$ used at the nominal operating stage 520 is greater than the averaging window $T_{av1} = M_{1av} \cdot T_{code}$ used at the training stage 510. By way of example, $M_{2av}$ may be about 100 or more, and the width $T_{av2}$ of the averaging window in the nominal operating stage 530 may vary from a fraction of a second to several minutes or even hours.

FIG. 6 illustrates an example back-scattering profile 648 as a function of distance along the example optical fiber line described above with reference to FIGs. 3A and 3B. The back-scattering profile 648 is an example of an output 548 of the nominal operating stage 530, and is computed by selectively averaging corresponding intensity samples $I_k$ within the "useful" zone, from $k = k_{start}$ to $k = k_{stop}$ (335 in FIG. 3B), over $M_{2av} = 10^5$ consecutive code periods $T_{code}$. The "useful" zone of the SIR estimates $143_n$ corresponds to the location of the line response pattern, e.g. 330, detected at stage 520. Intensity samples $I_k$ in the "needless" zones of the SIR estimates, e.g. 340 in FIG. 3B, $k < k_{start}$ and $k > k_{stop}$, which are outside of the "useful" line response pattern, e.g. 330, have been discarded prior to the averaging, with the remaining samples re-numbered and mapped to distances along the optical fiber line.

The training-stage operations 522, 524 may be performed, e.g. at system initialization, once the apparatus is properly connected to the optical fiber line to be monitored. The training-stage operations 522, 524 may also be repeated from time to time during normal operation of the system, e.g. to account for possible drifts in the system and/or changes in the optical fiber line.

FIG. 7 illustrates an example implementation of the line probing apparatus 100, which is referred to herein as an apparatus 700. The apparatus 700 includes a light source (LS) 726, an optical transmitter (OT) 720 to generate probe light 721 for launching into an optical fiber line (OFL) 760, a coherent optical receiver (COR) 730 to receive return light 761 from the OFL 760, and a processor 740 that may include a modulation code generator 710. The LS 726 may be, for example, a single-frequency laser having a narrow linewidth, e.g. about 10 kHz or smaller in some embodiments. In operation, the LS 726 emits coherent light that is split into two parts, one of the two parts provided to the optical phase modulator 724, and the other provided to an optical mixer 732 of the COT 730 as local oscillator (LO) light.

The optical transmitter 720 is an example of the optical transmitter 120, and includes a driver 722, an optical phase modulator 724, and an optional booster optical amplifier 726. The driver 722 is configured to convert a modulation signal 713 into an electrical drive signal to drive the optical phase modulator 724. The modulation signal 713 includes a periodic repetition of modulation codes 703 and is an example of the modulation signal 113. The optical phase modulator 724 is configured to modulate light from the LS 726 in phase, e.g. using a suitable phase modulation format, such as BPSK or M-PSK, where "M" is the number of different phase levels in the M-PSK constellation. In some embodiments, a QAM modulation format may be used, e.g. as described by Dorize, C., Awwad, E., Guerrier, S., and Renaudier, J., "Optimal probing sequences for polarization-multiplexed coherent phase OTDR", Optical Fiber Sensors Conference 2020 Special Edition, OSA Technical Digest (Optica Publishing Group, 2020), paper T3.23. The optical phase modulator 724 may be implemented using one or more Mach-Zehnder modulators (MZM), e.g., as an I-Q optical modulator formed with a nested MZM. In some embodiments, the optical phase modulator 724 may be a dual-polarization (DP) optical phase modulator configured to separately modulate optical phases of two polarization tributaries of probe light 721, e.g. with mutually orthogonal code sequences, as described, e.g. in European Patent application publication EP3460441A1.

In the example illustrated in FIG. 7, the COR 730 includes the optical mixer 732, e.g. a 90° optical hybrid, in which the return light 761 is mixed with the LO light with different relative phase shifts, as known in the art. Optical outputs of the optical mixer 732 are coupled to a photo-detector circuit 734, e.g. an array of balanced photodetectors. Output signals from the balanced photodetectors 734 are digitized, or sampled, by an analog to digital converter (ADC) 736, which outputs a stream of return signal samples 733. The stream of return signal samples 733 is an example of the sequence of return signal measurements $S_i$ 133 described above. The processor 740 is configured to processes the stream of signal samples 733 to obtain the back-scattering intensity profile 748, e.g. as a function of propagation time or a distance x along the optical fiber line 760, as generally described above with reference to FIGs. 1-6 and the line scattering profiles 148, 548, and 648.

In an example embodiment, the optical mixer 732 and the photodetector circuit 734 are configured to perform balanced detection of in-phase (I) and quadrature (Q) components of the return light 761. The stream of signal samples 733 may include parallel sequences of samples of the in-phase (I) and quadrature (Q) signals, which provide a complex representation of one polarization of the optical field of the return light 761 mixed with the LO light. In an embodiment, the I and Q signals may be separately measured for two polarization tributaries of the return signal 761, as known in the art of DP coherent optical receivers. E.g., the returned light 761 may be split inside the optical mixer 732 by a polarization beam splitter (not shown) into two orthogonal polarization components, conventionally denoted as the "X" and "Y" polarizations. Each of the polarization components is then mixed with the LO light from the LS 126 in a corresponding optical hybrid (not shown) at 90° phase shift increments to obtain four interference outputs, which are converted by the photodetector circuit 234 into four analog electrical signals. These analog electrical signals are sampled with the ADC 736 and passed to the processor 740, wherein the signals are processed, e.g. using a buffer 742 of length $N = T_{code}/T_s$ followed by an intensity response decoder 744 ("processing unit 744"), to obtain a sequence of code-length SIR estimates $143_n$, $\{I_k\}_n$, as described above.

At a first turn-on, or intermittently in exploitation, the apparatus 700 may operate in a pattern detection mode, in which the SIR estimates $143_n$ are directed to a pattern localization unit 746 of the processor 740. The pattern localization unit 746 may operate, e.g. as described above with reference to FIG. 5 (the training stage 520), to determine the location of the line backscattering pattern, e.g. 330, in the code-length SIR estimates $143_n$. The pattern location data 526 are then passed to a pattern averaging unit 747, and the apparatus 700 switches to a normal, or nominal, line-monitoring mode of operation. In this mode, the stream of SIR estimates $143_n$ is directed to the pattern averaging unit 747. The pattern averaging unit 747 computes the back-scattering profile 748, e.g., by truncating the SIR estimates $143_n$ to discard portions thereof, e.g. 340, outside of the detected locations of the "useful" portion thereof, e.g. 335, and selectively averaging the remaining pattern-containing portions of the SIR estimates $143_n$ over, typically, a large number of the code periods $T_{code}$ of the return signal measurements 733, e.g. as described above.

In an example implementation, the apparatus 700 is a DP MIMO interrogator, and the OT 720 is configured to use joint probing of the OFL 760 along two orthogonal polarization axes modulated in phase with mutually orthogonal delta-correlated, or nearly-delta correlated, codes. E.g., the modulation code 703 may include two parallel mutually-orthogonal modulation code sequences, $C_X$ and $C_Y$, e.g., orthogonal Golay sequences or constant envelope complex sequences describing a frequency sweep, as described, e.g., in European Patent application publication EP3460441A1, or by C. Dorize etal, "Identification of Rayleigh fading induced phase artifacts in coherent differential $\phi$-OTDR", Optics Letters, Vol. 46, No. 11 / 1 June 2021, or by C. Dorize et al, "From Coherent Systems Technology to Advanced Fiber Sensing for Smart Network Monitoring", Journal of Lightwave Technology, Vol. 41, No. 4, February 15, 2023. In this implementation, the operation of the processing unit 744 to generate the SIR estimates 143 $\{I_k\}_n$ may be approximately described using the Jones matrix formalism. A Jones matrix is a 2x2 matrix that describes conversion between input and output polarization states of an optical system. In this approach, each of the input and output polarization states are described by a two-element Jones vector $(E_x, E_y)^T$; here "$T$" indicates a transpose operation, and $E_x$ and $E_y$ represent amplitudes of two orthogonal polarization components of an optical field, e.g. the X-polarization and the Y-polarization components of the optical field. The operation of the intensity response decoder 744 may include processing code-length segments $733_n$ of the signal 733 measured by the COR 720 in two polarization channels to compute, e.g., at least some elements of a series of Jones matrices H($k$), $k$ = 1,.., $N$,

$$\mathbf{H}(k) = \begin{bmatrix} h_{xx}(k) & h_{xy}(k) \\ h_{yx}(k) & h_{yy}(k) \end{bmatrix}. \qquad (3)$$

At least some of the Jones matrices H($k$) characterize the two-way responses of consecutive segments of the optical fiber line 760, and their elements $h_{xx}(k)$, $h_{xy}(k)$, $h_{yx}(k)$, $h_{yy}(k)$ are complex numbers that approximately relate the two polarization components, $E_x$ and $E_y$, of the forward-propagating optical field at the input of a fiber line segment to the corresponding polarization components of the back-scattered field leaving the segment. The length $l$ of each such fiber line segment defines the spatial resolution of the sensing and is a function of the code symbol rate $Fs$ and an oversampling factor at the COR 720. The processing at 744 may include, e.g. correlating the code-long segments $733_n$ of the measured return signal 733 with the modulation code 703.

In embodiments wherein the COT 720 implements a BPSK modulation format, the code sequences $C_x$ and $C_y$ modulating the X-polarization and the Y-polarization tributaries, respectively, of the of the probe light 721 may be mutually orthogonal codes $G_x(n)$ and $G_y(n)$ that are built from complementary (Golay) sequences, e.g. as described by C. Dorize and E. Awwad, "Enhancing the performance of coherent OTDR systems with polarization diversity complementary codes", Optics Express, vol. 26, pp. 12878-12890, May 2018. The E-field of the return light 761 received at the COR 730 may comprise the following X- and Y-polarization components:

$$E_{rx}(k) = h_{xx}(k) \cdot C_x(k) + h_{xy}(k) \cdot C_y(k) \qquad (4)$$

$$E_{ry}(k) = h_{yx}(k) \cdot C_x(k) + h_{yy}(k) \cdot C_y(k) \qquad (5)$$

where $E_{rx}$ is the X polarization component of the field, $E_{ry}$ is the Y polarization component of the field, and $h_{xx}$, $h_{yy}$, $h_{xy}$, and $h_{yx}$ are elements of a 2x2 system transmission matrix

$$\mathbf{H}(k) = \begin{bmatrix} h_{xx}(k) & h_{xy}(k) \\ h_{yx}(k) & h_{yy}(k) \end{bmatrix}.$$

The correlation processes employed by the processing unit 744 to estimate the transmission channel responses may be, e.g. as follows, $k = 1,.., N$:

$$h'_{xx}(k) = J_x(i) \otimes C_x(i + k) \qquad (6)$$

$$h'_{xy}(k) = J_x(i) \otimes C_y(i + k) \qquad (7)$$

$$h'_{yx}(k) = J_y(i) \otimes C_x(i + k) \qquad (8)$$

$$h'_{yy}(k) = J_y(i) \otimes C_y(i + k) \qquad (9)$$

where $J_x(i)$ and $J_y(i)$, i=1,.., N, represent the code-length signal segments $733_n$ of the sequence of measurements 733 of the return light 761 in the two polarization channels, and "$\otimes$" indicates the correlation operation. The processing unit 744 may then compute the intensity values $I_k$, $k = 1,.., N$, for each $k$ as a norm of the corresponding Jones matrix $H_k = H(k)$. This norm may be computed, e.g., as the absolute value of the determinant of the Jones matrix, so that $I_k$ may be estimated as

$$I_k = |\det(\mathbf{H}(k)| \qquad (10)$$

In some implementations, $I_k$ may be estimated, e.g., based on the Frobenius norm of the $H_k$, e.g. as

$$I_k = |h_{xx}(k)|^2 + |h_{xy}(k)|^2 + |h_{yx}(k)|^2 + |h_{yy}(k)|^2 \qquad (11)$$

In a SIMO implementation, where the optical transmitter 720 modulates a single, e.g. the X, polarization of the probe light 721 in phase using delta-correlated code sequence(s) and the COT 730 is a DP optical receiver as described above, the processing unit 744 may estimate the intensity values $I_k$, e.g., as $I_k = |h_{xx}(k)|^2 + |h_{xy}(k)|^2$, or by summing the intensity values $I_{Xk}$ and $I_{Yk}$ obtained by separately processing the "X" and "Y" polarization components of the return light 761.

A probing apparatus of the present disclosure, e.g. apparatus 100 or apparatus 700, may estimate a back-scattering intensity profile of an optical fiber line by launching probe light that is phase-modulated with a repeated code signal into the optical fiber line, measuring return light received back from the optical fiber line, and selectively averaging estimates of system intensity response over a large number of code periods. Advantageously, a pattern-selective averaging of the system intensity response estimates is expected to enable optical loss measurements along the optical fiber line with a relatively high dynamic range with reduced computational resources.

An example embodiment described above, e.g. in the summary section and with reference to any one or more of the FIGs. 1-7, provides an apparatus (e.g. 100 or 700, FIGs. 1, 7) comprising: for monitoring an optical fiber line (e.g. 160, FIG. 1; 260, FIG. 2; or 760, FIG. 7). The apparatus (e.g. 100, FIG. 1; 700, FIG. 7) comprises an optical transmitter (e.g. 120, FIG. 1; 720, FIG. 7) coupled to a laser source (e.g. 126, FIG. 1; 726, FIG. 7), a coherent optical receiver (e.g. 130, FIG. 1; 730, FIG. 7), and a processor (e.g. 140, FIG. 1; 740, FIG. 7). The optical transmitter is configured to launch probe light (e.g. 121, FIG. 1; 261, FIG. 2; 721, FIG. 7) into the optical fiber line, the probe light being phase-modulated with repetitions of a modulation code (103, 703), each repetition of the modulation code spanning a code period ($T_{code}$). The coherent optical receiver (e.g. 130, FIG. 1; 730, FIG. 7) is configured to mix light from the laser source with return light (e.g. 161, FIG. 1; 261, FIG. 2; 761, FIG. 7) from the optical fiber line and to obtain, by optoelectronic conversion and analog to digital conversion, a time sequence (e.g. 133, FIG. 1; 733, FIG. 7) of return signal measurements, said time sequence spanning a sequence of the code periods ($T_{code}$). The processor is coupled to the coherent optical receiver and is configured to process successive segments (e.g. $133_n$, FIG. 1; $733_n$, FIG. 7) of the time sequence of return signal measurements using the modulation code to obtain time sequences of intensity values, the time sequences of intensity values comprising, for each of the processed segments, a time sequence (e.g. $143_n$, FIG. 1) of intensity values ($I_k$), and estimate a back-scattering intensity profile (e.g. 148, FIG. 1; 548, FIG. 5; 648, FIG. 6; 748, FIG. 7) for the optical fiber line by averaging, at least, corresponding portions (e.g. 335, FIG. 3B) of the time sequences of intensity values. Here, "corresponding portions" are portions, or segments, of the time sequences of intensity values $I_k$ having the same relative start (e.g. 331, $k=k_{start}$) and end (e.g. 333, $k=k_{stop}$) positions within the respective sequences of intensity values.

In some implementations, the code period ($T_{code}$) exceeds a round-trip time ($T_{RTT}$) of the probe light in the optical fiber line; wherein the corresponding portions of the time sequences of intensity values may comprise a line backscattering response pattern (e.g. 330, FIG. 3A), and wherein the processor may be further configured to switch between a backscattering pattern detection mode (e.g. 520, FIG. 5) and a back-scattering intensity profile measurement mode (e.g. 530, FIG. 5).

In some implementations, the pattern detection mode may comprise estimating a location of the line back-scattering pattern in the time sequences (e.g. $143_n$, FIG. 1) of intensity values. In some implementations, estimating the location of the line backscattering pattern (e.g. 330, FIG. 3B) may comprise detecting a start (e.g. 331, $k_{start}$, FIG. 3B) of the line backscattering pattern (e.g. 330) by detecting a peak (e.g. $332_1$, FIG. 3B) in an average (e.g. 320, FIG. 3B) of the time sequences of back-scattering values. In some implementations, the pattern detection mode may comprise estimating or detecting an end (e.g. 333, $k_{stop}$, FIG. 3B) of the line backscattering pattern (e.g. 330) in the average (e.g. 320, FIG. 3B) of the time sequences of back-scattering intensity values. In some implementations, the processor may be configured to estimate the location of the end (e.g. 333, $k_{stop}$, FIG. 3B) of the line backscattering pattern based on a known estimate of a length of the optical fiber line, or a length of a last fiber span (e.g. $241_{Nsp}$, FIG. 2) of the optical fiber line.

In any of the above implementations, the backscattering pattern detection mode may include averaging the time sequences of intensity values over a series of the code periods. In some of such implementations, the processor may be configured to average corresponding intensity values in the pattern detection mode over a smaller number of the code periods than in the back-scattering intensity profile measurement mode, corresponding intensity values belonging to the same segment (e.g. $143_n$, same $n$) of the code period.

In any of the above implementations, each repetition of the modulation code may immediately follow a previous repetition of the modulation code, or have a delay between two successive repetitions of the modulation code may be shorter than the round-trip time ($T_{RTT}$) of the probe light in the optical fiber line.

In any of the above implementations, the optical fiber line (e.g. 160, 260, or 760) may comprise a forward optical fiber path (e.g. 251, FIG. 2) connected to receive the probe light (e.g. 121, FIG. 1 or FIG. 2; 721, FIG. 7) and comprising a sequence of optical fiber line segments (e.g. $241_1$, $241_2$, $241_{Nsp}$, FIG. 2) connected by optical amplifiers (e.g. 220), and a return optical fiber path (e.g. 252) for transmitting respective portions (e.g. $263_1$, $263_2$, $263_{Nsp}$) of the back-scattered light from the optical fiber line segments back to the coherent optical receiver (e.g. 130, FIG. 1; 730, FIG. 7).

In any of the above implementations, the processor may be configured to correlate the segments (e.g. $133_n$) of the return signal measurements (e.g. 133) with the modulation code (e.g. 103, FIG. 1; 703, FIG. 7) to obtain the time sequences of the intensity values (e.g. $143_n$, FIGs. 1, 4, 7).

In any of the above implementations, the modulation code may comprise a first modulation code (e.g. "$C_X$") for a first polarization axis (e.g. "X") of the probe light and a second modulation code (e.g. "$C_Y$") for a second polarization axis (e.g. "Y") of the probe light orthogonal to the first polarization axis, wherein the second modulation code is orthogonal to the first modulation code.

In any of the above implementations, the optical receiver (e.g. 130, FIG. 1; 730, FIG. 7) may comprise a dual-polarization optical hybrid (e.g. 732, FIG. 7).

A related example embodiment described above, e.g. in the summary section and with reference to any one or more of the FIGs. 1-7, provides a method (e.g. 400, FIG. 4, or 500, FIG. 5) for probing an optical fiber line (e.g. 160, 260, or 760). The method comprises: launching probe light (e.g. 121, 721) into the optical fiber line, the probe light being light from a laser source (e.g. 126, 726) phase-modulated with repetitions of a modulation code (e.g. 103, 703), each repetition of the modulation code spanning a code period ($T_{code}$); sampling, over a sequence of the code periods, a mixture of return light (e.g. 161, 261, or 761) received from the optical fiber line with light from the laser source to obtain a time sequence (e.g. 133, or 733) of return signal measurements; processing successive segments (e.g. $133_n$, FIGs. 1, 4, $733_n$, FIG. 7) of the time sequence of return signal measurements using the modulation code to obtain time sequences of intensity values (e.g. $143_n$, FIGs. 1, 4, 5A-5C, 7; 310, FIG. 3A), the time sequences of intensity values comprising, for each of the segments, a respective time sequence of intensity values (e.g. $I_k$); and averaging, at least, corresponding portions (e.g. 335, FIG. 3B) of the time sequences of intensity values over a series of code periods to estimate a back-scattering intensity profile (e.g. 148, FIG. 1; 548, FIG. 5; 648, FIG. 6; or 748, FIG. 7) for the optical fiber line.

In some implementations of the method, the code period ($T_{code}$) exceeds a round-trip time ($T_{RTT}$) of the probe light in the optical fiber line, and estimation the back-scattering intensity profile may comprise averaging only the corresponding portions (e.g. 335) of the time sequences of intensity values, the corresponding portions comprising a line backscattering response pattern (e.g. 330) for the optical fiber line. The method (e.g. 400 or 500) may further comprise detecting, prior to the estimation of the back-scattering intensity profile, a location (e.g. 335 between 331 and 333) of the line backscattering response pattern in the time sequences of intensity values.

In some implementations of the method, detecting the location of the line backscattering response pattern may comprise detecting a peak (e.g. $332_1$, FIG. 3B) in an average time sequence (e.g. 320, FIG. 3B) of intensity values, the average time sequence of intensity values being computed by averaging over an initialization series (e.g. 525, FIG. 5B) of code periods.

In any of the above implementations of the method, the processing may comprise correlating the segments (e.g. $133_n$, FIG. 1 or $733_n$, FIG. 7) of the time sequence of return signal measurements (e.g. 133, FIG. 1 or 733, FIG. 7) with the modulation code (e.g. 103, FIG. 1; 703, FIG. 7).

The example embodiments described above are not intended to be limiting, and many variations will become apparent to a skilled reader having the benefit of the present disclosure. For example, code sequences that are different from those described above may be used for the back-scattering intensity probing and/or monitoring. In the description above, for purposes of explanation and not limitation, specific details, such as particular architectures, interfaces, techniques, etc., are set forth in order to provide a thorough understanding of the present invention. In some instances, detailed descriptions of well-known devices, circuits, and methods are omitted so as not to obscure the the present disclosure with unnecessary detail. Thus, for example, it will be appreciated by those skilled in the art that block diagrams herein can represent conceptual views of illustrative circuitry embodying the principles of the technology. All statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, while the present invention has been particularly shown and described with reference to example embodiments as illustrated in the drawing, it will be understood by one skilled in the art that various changes in detail may be affected therein without departing from the spirit and scope of the invention as defined by the claims.

**Claims**

1. An apparatus for probing an optical fiber line, the apparatus (100, 700) comprising:

    an optical transmitter (120, 720) coupled to a laser source (126, 726) and configured to launch probe light (121, 721) into the optical fiber line (160, 260, 760), the probe light being phase-modulated with repetitions of a modulation code (103, 703), each repetition of the modulation code spanning a code period ($T_{code}$);
    a coherent optical receiver (130, 730) configured to mix light from the laser source with return light (161, 261, 761) from the optical fiber line and to obtain, by optoelectronic conversion and
    analog to digital conversion, a time sequence (133, 733) of return signal measurements, said time sequence spanning a sequence of the code periods ($T_{code}$); and
    a processor (140, 740) coupled to the coherent optical receiver and configured to:

        process successive segments ($133_n$, $733_n$) of the time sequence of return signal measurements using the modulation code to obtain time sequences of intensity values, the time sequences of intensity values comprising, for each of the processed segments, a time sequence ($143_n$) of intensity values ($I_k$), and
        estimate a back-scattering intensity profile (148, 548, 748) for the optical fiber line by averaging, at least, corresponding portions (335) of the time sequences of intensity values.

2. The apparatus of claim 1, wherein the code period ($T_{code}$) exceeds a round-trip time ($T_{RTT}$) of the probe light in the optical fiber line, wherein the corresponding portions of the time sequences of intensity values comprise a line backscattering response pattern, and wherein the processor is further configured to switch between a backscattering pattern detection mode and a back-scattering intensity profile measurement mode.

3. The apparatus of claim 2, wherein the pattern detection mode comprises estimating a location of the line back-scattering pattern in the time sequences ($143_n$) of intensity values.

4. The apparatus of claim 3, wherein estimating the location of the line backscattering pattern comprises detecting a start of the line backscattering pattern by detecting a peak in an average of the time sequences of intensity values.

5. The apparatus of claim 2, 3, or 4, wherein the backscattering pattern detection mode includes averaging the time sequences of intensity values over a series of the code periods.

6. The apparatus of claim 5, wherein the processor is configured to average corresponding intensity values in the pattern detection mode over a smaller number of the code periods than in the back-scattering intensity profile measurement mode.

7. The apparatus of any one of the above claims, wherein each repetition of the modulation code immediately follows a previous repetition of the modulation code, or wherein a delay between two successive repetitions of the modulation code is shorter than a round-trip time of the probe light in the optical fiber.

8. The apparatus of any one of claims 1 to 7, wherein the optical fiber line (160, 260, 760) comprises a forward optical fiber path (251) connected to receive the probe light (121, 721) and comprising a sequence of optical fiber line segments ($241_1$, $241_2$, $241_{Nsp}$) connected by optical amplifiers (220), and a return optical fiber path (252) for transmitting respective portions ($263_1$, $263_2$, $263_{Nsp}$) of the back-scattered light from the optical fiber line segments back to the coherent optical receiver (130, 730).

9. The apparatus of any one of claims 1 to 8, wherein the processor is configured to correlate the segments ($133_n$) of the return signal measurements (133) with the modulation code (103) to obtain the time sequences of the intensity values ($143_n$).

10. The apparatus of any one of claims 1 to 9, wherein the modulation code comprises a first modulation code for a first polarization axis of the probe light and a second modulation code for a second polarization axis of the probe light orthogonal to the first polarization axis, wherein the second modulation code is orthogonal to the first modulation code.

11. The apparatus of claim 10, wherein the optical receiver (130, 730) comprises a dual-polarization optical hybrid (732).

12. A method for probing an optical fiber line (160, 260, 760), the method comprising:

   launching probe light (121, 721) into the optical fiber line, the probe light being light from a laser source (126, 726) phase-modulated with repetitions of a modulation code (103, 703), each repetition of the modulation code spanning a code period ($T_{code}$);
   sampling, over a sequence of the code periods, a mixture of return light (161, 261, 761) received from the optical fiber line with light from the laser source to obtain a time sequence (133, 733) of return signal measurements;
   processing successive segments ($133_n$, $733_n$) of the time sequence of return signal measurements using the modulation code to obtain time sequences of intensity values, the time sequences of intensity values comprising, for each of the segments, a respective time sequence ($143_n$) of intensity values;
   averaging, at least, corresponding portions of the time sequences of intensity values over a series (525, 535) of code periods to estimate a back-scattering intensity profile (148, 548, 748) for the optical fiber line.

13. The method of claim 12, wherein the code period ($T_{code}$) exceeds a round-trip time ($T_{TRT}$) of the probe light in the optical fiber line, and wherein the estimation of the back-scattering intensity profile comprises averaging only the corresponding portions (335) of the time sequences of intensity values ($143_n$), the corresponding portions comprising a line backscattering response pattern (330) for the optical fiber line;
the method further comprising detecting, prior to the estimation of the back-scattering intensity profile, a location of the line backscattering response pattern in the time sequences of intensity values.

14. The method of claim 13, wherein detecting the location of the line backscattering response pattern comprises detecting a peak ($332_1$) in an average time sequence (320) of intensity values, the average time sequence of intensity values being computed by averaging over an initialization series (525) of code periods.

15. The method of claim 12, 13, or 14, wherein the processing comprises correlating the segments ($133_n$, $733_n$) of the time sequence of return signal measurements (133, 733) with the modulation code (103, 703).

FIG. 1

**FIG. 2**

FIG. 3A

FIG. 3B

400

Launch probe light phase-modulated with a repeated code signal ——— 410

Sample a mixture of back-scattered light with LO light ——420

133 $\{S_{ij}\}_n$ ———133$_n$

$\{S_{ij}\}_{n+1}$ ———133$_{n+1}$

Code

103

Obtain time sequences of intensity values ——— 430

$\{I_k\}_n$ ———143$_n$

$\{I_k\}_{n+1}$ ——— 143$_{n+1}$

Average corresponding portions of a set of the intensity time sequences ——— 440

$<I(k)>_{RTT}$ ——— 148

FIG. 4

500

System intensity response
decoding — 510

*Training stage* 520                    *Nominal operating* 530

Intensity averaging over multiple
T$_{code}$ segments — 522

Useful pattern detection
(T$_{start}$, T$_{stop}$)

Detected pattern averaging

534

$k_{start}$, $k_{stop}$

524                    526

Back-scattering
intesity profile

548

## FIG. 5A

525

T$_{code}$

···  $\{I_k\}_{n-M1av}$ ··· $\{I_k\}_{n-1}$ $\{I_k\}_n$  ···

143$_{n-M1av}$       T$_{av1}$ 143$_{n-1}$   143$_n$

## FIG. 5B

535   537$_{n-M2av}$   537$_{n-1}$   537$_n$

···  $\{I_k\}_{n-M2av}$ ··· $\{I_k\}_{n-1}$ $\{I_k\}_n$  ···

143$_{n-M2av}$       T$_{av2}$ —539   143$_n$

## FIG. 5C

FIG. 6

EP 4 682 501 A1

700

720    722    724    726    721    760

Driver → Phase Modulator → ▷

713

740

747    Code    710

748    703

Pattern Averaging    LS    726

143ₙ    733ₙ    733    761

526    Response Decoder    Buffer    ADC    Opt. Mixer

Pattern Localization

744    742    736    734    732

746    730

FIG. 7

20

Europäisches
Patentamt
European
Patent Office
Office européen
des brevets

# EUROPEAN SEARCH REPORT

**Application Number**

EP 24 18 9130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RENATA GOLDMAN ET AL: "Direct Detection and Coherent Optical Time-Domain Reflectometry With Golay Complementary Codes", JOURNAL OF LIGHTWAVE TECHNOLOGY, IEEE, USA, vol. 31, no. 13, 1 July 2013 (2013-07-01), pages 2207-2222, XP011514296, ISSN: 0733-8724, DOI: 10.1109/JLT.2013.2264273 | 1,7, 9-12,15 | INV. G01M11/00 |
| Y | * figure 2 * * title * * page 2208 * * page 2212 * * page 2220 * | 2-6,8, 13,14 | |
| Y | HIROSHI NAKAMOTO ET AL: "USE OF SIGNAL PROCESSING TECHNIQUES TO IMPROVE THE DYNAMIC RANGE OF COHERENT OTDRS", ELECTRONICS & COMMUNICATIONS IN JAPAN, PART I - COMMUNICATIONS, WILEY, HOBOKEN, NJ, US, vol. 75, no. 10, 1 October 1992 (1992-10-01), pages 42-53, XP000367690, ISSN: 8756-6621 * page 48; figure 1 * | 2-6,13, 14 | |
| Y | US 9 960 843 B2 (SHINER ANDREW D [CA]; REIMER MICHAEL ANDREW [CA] ET AL.) 1 May 2018 (2018-05-01) * figure 1 * * column 14, lines 27-29 * | 8 | |

**TECHNICAL FIELDS SEARCHED (IPC)**

G01M

The present search report has been drawn up for all claims

| Place of search | Date of completion of the search | Examiner |
|---|---|---|
| The Hague | 19 December 2024 | Kaiser, Jean-Luc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................................
& : member of the same patent family, corresponding document

EPO FORM 1503 03.82 (P04C01)

**EP 4 682 501 A1**

## ANNEX TO THE EUROPEAN SEARCH REPORT
## ON EUROPEAN PATENT APPLICATION NO.

EP 24 18 9130

19-12-2024

| Patent document cited in search report | | Publication date | Patent family member(s) | | Publication date |
|---|---|---|---|---|---|
| US 9960843 | B2 | 01-05-2018 | EP | 3236228 A1 | 25-10-2017 |
| | | | US | 2017310390 A1 | 26-10-2017 |
| | | | US | 2018241468 A1 | 23-08-2018 |

EPO FORM P0459

# EP 4 682 501 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3460441 A

- EP 3460441 A1

### Non-patent literature cited in the description

- **C. DORIZE** ; **E. AWWAD**. Enhancing the performance of coherent OTDR systems with polarization diversity complementary codes''. *Optics Express*, May 2018, vol. 26, 12878-12890
- Optimal probing sequences for polarization-multiplexed coherent phase OTDR. **DORIZE, C.** ; **AWWAD, E.** ; **GUERRIER, S.** ; **RENAUDIER, J., "**. Optical Fiber Sensors Conference 2020 Special Edition, OSA Technical Digest. Optica Publishing Group,, 2020

- **C. DORIZE et al.** Identification of Rayleigh fading induced phase artifacts in coherent differential $\phi$-OTDR. *Optics Letters*, 01 June 2021, vol. 46 (11)
- **C. DORIZE et al.** From Coherent Systems Technology to Advanced Fiber Sensing for Smart Network Monitoring. *Journal of Lightwave Technology*, 15 February 2023, vol. 41 (4)
- **C. DORIZE** ; **E. AWWAD,**. Enhancing the performance of coherent OTDR systems with polarization diversity complementary codes. *", Optics Express,*, May 2018, vol. 26, 12878-12890